# EUROPEAN PATENT SPECIFICATION

(11) **EP 3 131 978 B1**
(45) Date of publication and mention of the grant of the patent: **27.07.2022**
(21) Application number: 15779672.3
(22) Date of filing: 08.04.2015
(51) Int. Cl.: C09D 5/08, C09D 5/10, C09C 1/62, C08K 3/08, B32B 27/20, C09D 201/00, C22C 18/00, C22C 23/00, C08K 3/04, B22F 1/00, C23C 22/02, C09D 167/00

(54) **CORROSION-RESISTANT COATING COMPOSITION**
KORROSIONSRESISTENTE BESCHICHTUNGSZUSAMMENSETZUNG
COMPOSITION DE REVÊTEMENT RÉSISTANT À LA CORROSION

(30) Priority: 15.04.2014 US 201461979589 P
(43) Date of publication of application: 22.02.2017
(73) Proprietor: SWIMC LLC, Cleveland, Ohio 44115 (US)
(72) Inventor: BEST, Ted R., Minneapolis, MN 55415 (US); TAYLOR, Melody R., Bowling Green, KY 42101-7512 (US)
(74) Representative: Novagraaf Group
(86) International application number: PCT/US2015/024835
(87) International publication number: WO 2015/160582

(56) References cited:
- WO-A1-2005/044928
- WO-A1-2011/058021
- WO-A1-2013/056848
- WO-A1-2014/032844
- US-A1- 2006 011 893
- US-A1- 2006 011 893
- US-A1- 2010 247 956
- US-A1- 2010 276 293
- US-A1- 2010 276 293
- US-A1- 2011 311 727

## Description

### CROSS-REFERENCE TO RELATED APPLICATION(S)

### BACKGROUND

Metal products, including aluminum and steel products, are used in a wide variety of applications. Conventionally, metal-containing pigments, particularly chromate (Cr (VI))-based pigments, are used as corrosion inhibitors, because of the ability of chromate ions to passivate a metal surface and thereby create a barrier to moisture. However, current chromate-based systems are toxic, carcinogenic and require special handling for use and disposal.

Accordingly, a number of chromium-free inhibitors have been developed. These include organic inhibitors, phosphates, phosphosilicates, calcium ion-exchanged silicas, vanadates, molybdates and the like. However, these inhibitors do not provide the level of corrosion resistance that standard chromate-based pigments provide.

Metallic zinc pigments arc sometimes used for protecting metal substrates from corrosion, because zinc can provide cathodic protection to the surface. When properly formulated and applied, zinc-rich primers are highly effective in protecting metal surfaces from corrosion. Moreover, unlike other metals that offer even greater cathodic protection, zinc is less reactive and is safe to use in most compositions. However, zinc is an expensive material, and attempts to replace even small amount of the zinc in a composition with lower cost materials have led to a significant decrease in performance.

Therefore, there is a need for low cost metal-containing pigments for use in coating compositions for metal substrates, where the corrosion resistance of the coating is superior to, or at least comparable with chromate-based pigments or zinc-rich pigments.

US 2010/276293 A1 discloses an anti-corrosion system for metals consisting of at least one finish or coating that can be applied to a metal, said finish or coating comprising an organic matrix.

US 2006/011893 A1 discloses an enamel-like mixture containing resin and inorganic particles for applying a polymeric, corrosion-proof, wear-resistant, deformable and electrically conductive covering to a substrate.

US 2011/311727 A1 discloses a weldable pre-primed coating composition, comprising binder resins, a crosslinker, an anti-corrosive pigment, conductive metal powder and carbon nanotubes.

### SUMMARY

The present invention relates to a corrosion-resistent coating composition according to any one of claims 1 to 6, a method of making a corrosion-resistant coated article according to claim 7 and the coated article according to claim 8.

The present description provides a corrosion-resistant coating composition including a binder system and a pigment system. The binder system includes a resin component, a crosslinking component and a cure catalyst. The pigment system includes a metal alloy pigment component and a carbonaceous component. The pigment system is dispersed in the binder system at a pigment:binder ratio of 1:1 to 9:1.

The present description provides a method of making a corrosion-resistant article, including providing a substrate or portion of a substrate made of galvanized metal, and providing a coating composition including a binder system and a pigment system. The binder system includes a resin component, a crosslinking component and a cure catalyst. The pigment system includes a metal alloy pigment component and a carbonaceous component. The pigment system is dispersed in the binder system at a pigment:binder ratio of 1:1 to 9:1. The coating composition is applied to the substrate, and cured to obtain a cured coating having dry film thickness of 2.5 to 12.5 µm (0.1 to 0.5 mil).

The present description provides a coated article made by a method of making a corrosion-resistant article, including providing a substrate or portion of a substrate made of galvanized metal, and providing a coating composition including a binder system and a pigment system. The binder system includes a resin component, a crosslinking component and a cure catalyst. The pigment system includes a metal alloy pigment component and
a carbonaceous component. The pigment system is dispersed in the binder system at a pigment:binder ratio of 1:1 to 9:1. The coating composition is applied to the substrate, and cured to obtain a cured coating having dry film thickness of 2.5 to 12.5 µm (0.1 to 0.5 mil).

### BRIEF DESCRIPTION OF FIGURES

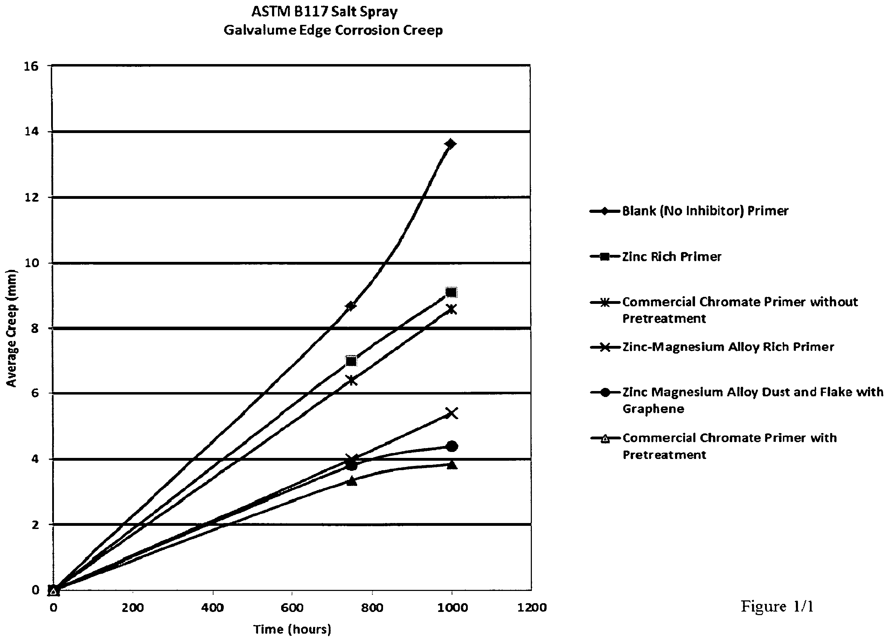

FIG. 1 is a graphical representation of the corrosion resistance of various cured coatings applied to a GALVALUME steel substrate following salt spray exposure.

### DEFINITIONS

Unless otherwise specified, the following terms as used herein have the meanings provided below.

Substitution is anticipated on the organic groups of the polyesters and other polymeric resins used in the coating compositions described herein. As a means of simplifying the discussion and recitation of certain terminology used throughout this application, the terms "group" and "moiety" are used to differentiate between chemical species that allow for substitution or that may be substituted and those that do not allow or may not be so substituted. Thus, when the term "group" is used to describe a chemical substituent, the described chemical material includes the unsubstituted group and that group with O, N, Si, or S atoms, for example, in the chain (as in an alkoxy group) as well as carbonyl groups or other conventional substitution. Where the term "moiety" is used to describe a chemical compound or substituent, only an unsubstituted chemical material is intended to be included. For example, the phrase "alkyl group" is intended to include not only pure open chain saturated hydrocarbon alkyl substituents, such as methyl, ethyl, propyl, t-butyl, and the like, but also alkyl substituents bearing further substituents known in the art, such as hydroxy, alkoxy, alkylsulfonyl, halogen atoms, cyano, nitro, amino, carboxyl, etc. Thus, "alkyl group" includes ether groups, haloalkyls, nitroalkyls, carboxyalkyls, hydroxyalkyls, sulfoalkyls, etc. On the other hand, the phrase "alkyl moiety" is limited to the inclusion of only pure open chain saturated hydrocarbon alkyl substituents, such as methyl, ethyl, propyl, t-butyl, and the like. The term "hydrocarbyl moiety" refers to unsubstituted organic moieties containing only hydrogen and carbon. As used herein, the term "group" is intended to be a recitation of both the particular moiety, as well as a recitation of the broader class of substituted and unsubstituted structures that includes the moiety.

The term "crosslinker" refers to a molecule capable of forming a covalent linkage between polymers or between two different regions of the same polymer.

The term "on", when used in the context of a coating applied on a surface or substrate, includes both coatings applied directly or indirectly to the surface or substrate. Thus, for example, a coating applied to a primer layer overlying a substrate constitutes a coating applied on the substrate.

Unless otherwise indicated, the term "polymer" includes both homopolymers and copolymers (i.e., polymers of two or more different monomers). Similarly, unless otherwise indicated, the use of a term designating a polymer class such as, for example, "polyester" is intended to include both homopolymers and copolymers (e.g., polyester-urethane polymers).

The term "unsaturation" when used in the context of a compound refers to a compound that includes at least one double bond that is not present in an aromatic ring.

The term "comprises" and variations thereof do not have a limiting meaning where these terms appear in the description and claims.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments docs not imply that other embodiments are not useful, and is not intended to exclude other embodiments.

As used herein, "a," "an," "the," "at least one," and "one or more" are used interchangeably. Thus, for example, a coating composition that comprises "an" additive can be interpreted to mean that the coating composition includes "one or more" additives.

Also herein, the recitations of numerical ranges by endpoints include all numbers subsumed within that range (e.g., 1 to 5 includes 1, 1.5, 2, 2.75, 3, 3.80, 4, 5, etc.). Furthermore, disclosure of a range includes disclosure of all subranges included within the broader range (e.g., 1 to 5 discloses 1 to 4, 1.5 to 4.5, 1 to 2, etc.).

### DETAILED DESCRIPTION

In one embodiment, the present description provides a corrosion-resistant coating composition comprising a binder system and a corrosion-resistant pigment system. The binder system includes a resin component, a crosslinking component and a cure catalyst. The pigment system includes a metal alloy pigment component and
a carbonaceous component. Preferably, the coating composition includes at least a film-forming amount of the binder system. Although coating compositions including a liquid carrier are presently preferred, it is contemplated that the composition described herein may have utility in other coating application techniques such as, for example, powder coating, extrusion, or lamination.

The binder system includes a resin component. The resin component is selected from various film-forming binder resins, including, for example, polyesters, modified polyesters, polyurethanes, polyacrylates, epoxies, polyethers, modified polyacrylates, amides, amines, isocyanates, and mixtures or combinations thereof. In an aspect, the binder system includes about 1 to 50 wt%, preferably 5 to 25 wt%, more preferably 10 to 20 wt% of the resin component, based on the total weight of the composition.

In a preferred aspect, the resin component including one or more polyester resins. Suitable polyesters include, for example, resins formed by reaction of compounds having reactive functional groups such as, for example, compounds with hydroxyl, carboxyl, anhydride, acyl, or ester functional groups. Hydroxyl functional groups are known to react, under proper conditions, with acid, anhydride, acyl or ester functional groups to form a polyester linkage. Suitable compounds for use in forming the polyester resin include mono-, di-, and multi-functional compounds. Di-functional compounds are presently preferred. Suitable compounds include compounds having reactive functional groups of a single type (e.g., mono-, di-, or poly-functional alcohols or mono-, di-, or poly-functional acids) as well as compounds having two or more different types of functional groups (e.g., a compound having both an anhydride and an acid group, or a compound having both an alcohol and an acid group, etc).

The coating composition further includes a crosslinker or crosslinking agent. The crosslinker may be used to facilitate cure of the coating and to build desired physical properties. When present, the amount of crosslinker will vary depending upon a variety of factors, including, e.g., the intended end use and the type of crosslinker. Typically, one or more crosslinkers will be present in the coating composition in an amount greater than about 0.01 wt%, more preferably from about 1 wt% to about 20 wt%, even more preferably from about 2 wt% to about 10 wt%, and most from about 3 wt% to about 7 wt%, based on total weight of the composition.

Polyesters having hydroxyl groups are curable through the hydroxyl groups. Suitable hydroxyl-reactive crosslinking agents may include, for example, aminoplasts, which are typically oligomers that are the reaction products of aldehydes, particularly formaldehyde; amino- or amido-group-carrying substances exemplified by melamine, urea, dicyandiamide, benzoguanamine and glycoluril; blocked isocyanates, or a combination thereof.

Suitable crosslinkers include aminoplasts, which are modified with alkanols having from one to four carbon atoms. It is suitable in many instances to employ precursors of aminoplasts such as hexamethylol melamine, dimethylol urea, hexamethoxymethyl melamine, and the etherified forms of the others. Thus, a wide variety of commercially available aminoplasts and their precursors can be used. Suitable commercial amino crosslinking agents include those sold by Cytek under the tradename CYMEL (e.g., CYMEL 301, CYMEL 303, and CYMEL 385 alkylated melamine-formaldehyde resins, or mixtures of such resins, are useful) or by Solutia under the tradename RESIMENE.

Suitable crosslinkers may also include blocked isocyanates, such as, for example, as described in U.S. Pat. No. 5,246,557. Blocked isocyanates are isocyanates in which the isocyanate groups have reacted with a protecting or blocking agent to form a derivative that will dissociate on heating to remove the protecting or blocking agent and release the reactive isocyanate group. Some examples of suitable blocking agents for polyisocyanates include aliphatic, cycloaliphatic or aralkyl monohydric alcohols, hydroxylamines and ketoximes. Presently preferred blocked polyisocyanates dissociate at temperatures of around 160°C. The presence of a catalyst is preferred to increase the rate of reaction between the liberated polyisocyanate and the active hydrogen-containing compound (e.g., a hydroxyl-functional polyester). The catalyst can be any suitable catalyst such as, for example, dibutyl tin dilaurate or triethylene diamine.

Suitable crosslinkers also include unblocked isocyanates. Unblocked isocyanates are difunctional or polyfunctional isocyanates with free isocyanate groups attached to aliphatic, cycloaliphatic, aryl, araliphatic and/or aromatic moieties. Examples include, without limitation, tetramethylene diisocyanate, hexamethylene diisocyanate, dodecamethylene diisocyanate, 1,4-diisocyanatocyclohexane, 3,5,5-trimethylcyclohexyl isocyanate, isophorone diisocyanate, and the like.

In some embodiments, an ultraviolet curing crosslinker or an electron-beam curing crosslinker may be suitable. Examples of suitable such crosslinkers may include 1,6-hexanediol diacrylate, 1,4-butanediol diacrylate, trimethylolpropane triacrylate, or mixtures thereof.

The coating composition described herein may be produced by conventional methods known to those of skill in the art. In an embodiment, the coating composition is prepared by use of a polymerization or curing aid, such as a catalyst, for example. Suitable processing aids include, without limitation, metal catalysts (e.g., stannous oxalate, stannous chloride, butylstannoic acid, dibutyl tin dilaurate, dibutyl tin oxide, tetrabutyltitanate, or tetra butylzirconate), antioxidants (e.g., hydroquinone, monotertiarybutyl-hydroquinone, benzoquinone, 1,4-napthoquinone,2,5-diphenyl-p-benzoquinone, or p-tert butylpyrocatechol), unblocked and blocked acid catalysts (e.g., dinonylnaphthalene sulfonic acid, dinonylnaphthalene disulfonic acid, dodecyl benzene sulfonic acid, p-toluene sulfonic acid, phosphate esters, and mixtures or combinations thereof), amine-type catalysts (e.g., 1,4-diazobicyclo[2.2.2]octane, and variations or derivatives thereof), and mixtures or combinations thereof. The amount of catalyst depends on the amount and nature of the reactants, but is no more than about 5 wt%, preferably no more than about 2 wt%, more preferably about 0.05 to 0.1 wt%, based on the total weight of the composition. In a preferred aspect, the catalyst is an amine-type catalyst and is present in an amount of no more than about 5 wt%.

The binder system of the coating composition described herein is preferably made by blending the resin component with a crosslinker. In an embodiment, the blending process is carried out in a liquid carrier, preferably a solvent or mixture of solvents, preferably a solvent or blend of solvents having a kauri butanol number (Kb) of about 50 or more. Suitable solvents include, for example, aromatic hydrocarbon solvents (AROMATIC 150, and the like); ketones (e.g., acetone, methyl ethyl ketone, cyclohexanone, and the like) esters (e.g., dialkyl esters (such as dimethyl ester, diisobutyl ester, propylene glycol monomethyl ether acetate (PM acetate), long chain acetates, and the like), alcohols, chlorinated hydrocarbons, ester-ethers (e.g., glycol ether-esters, ethyl-3-ethoxypropionate, commercially available as EEP from Eastman, and the like), and combinations or mixtures thereof. In a preferred aspect, the solvent is an aromatic hydrocarbon or a solvent blend of at least one aromatic hydrocarbon and at least one ester, and is present in an amount of up to about 70 wt%, preferably about 5 wt% to 50 wt%, more preferably 10 wt% to about 30 wt%, based on the total weight of the composition.

The coating composition described herein includes a pigment system. The pigment system includes at least one metal alloy component and at least one carbonaceous component. In an aspect, the components of the pigment system are preferably dispersed in the resin component or in the crosslinking component of the binder system. In another aspect, the pigment system may be used or combined with other pigments and incorporated into any pigments used to achieve a desired color or shade of coating composition. In an aspect, the pigment system is present in an amount of 20 to 95 wt%, preferably 40 to 80 wt%, based on the total weight of the coating composition.

Conventionally, primer coatings applied to metal substrates often include metal particles, metal salts, or metal-containing pigments. Without limiting to theory, it is believed that the enhanced corrosion protection is the result of the metal acting as a sacrificial anode, and thereby providing cathodic protection to the substrate. In addition, metal hydroxides or oxides formed in the initial stages of corrosion can act as a barrier coating, or may passivate the substrate surface to corrosion. Accordingly, metal-rich primers, such as zinc-rich primers, for example, are well known in the art. Other metals, such as magnesium, for example, are also known to provide sacrificial protection to metal surfaces, and in fact, the sacrificial effect of a metal such as magnesium is greater than that of zinc alone. However, certain metals, like magnesium, for example, are very reactive and therefore difficult to use safely in coating compositions.

In order to balance the corrosion resistant properties of the metal pigment with metal reactivity, the metal component may be combined or alloyed with a different or second metal to obtain a material with optimal corrosion resistance and without an impact on performance.

Accordingly, the coating composition described herein includes a pigment system. The pigment system includes at least one metal alloy component. In an aspect, the metal alloy includes a primary metal component and a secondary metal component alloyed with the primary metal. Examples of metals suitable for use as the primary component include, without limitation, zinc, magnesium, aluminum, and combinations or mixtures thereof. The primary metal component is alloyed with a secondary metal component. Examples of metals suitable for alloying with the primary metal component include, without limitation, magnesium, zinc, aluminum, calcium, strontium, titanium, zirconium, vanadium, niobium, tantalum, molybdenum, tungsten, manganese, rhenium, iron, ruthenium, osmium, cobalt, rhodium, iridium, nickel, palladium, platinum, copper, silver, gold, tin, gallium, indium, thallium, carbon, silicon, germanium, lead, nitrogen, phosphorus, arsenic, antimony, bismuth, selenium and tellurium. The suitability of a given alloying component is not dependent on alloy construction, content of the alloy, or the presence or absence of pure metal phases, impurities, and the like.

In the present invention, the coating composition includes a pigment system that includes a metal alloy component, where the primary metal component of the metal alloy is zinc, and is alloyed with magnesium, i.e. a zinc-magnesium (ZnMg) alloy. Magnesium is known to provide greater sacrificial protection than zinc alone, but the high reactivity of magnesium limits its use in coating compositions. A zinc-magnesium alloy combines the beneficial properties of both metals, where magnesium provides enhanced cathodic protection and zinc provides lower reactivity during production, storage and application of the coating composition.

The ZnMg metal alloy component may have any particle size or shape, but in a preferred aspect, the ZnMg metal alloy component has spherical particles (i.e. ZnMg dust) or flake-shaped particles (i.e. ZnMg flake), or a mixture of spherical and flake-shaped particles. The ZnMg alloy includes about 26 wt% magnesium and about 74 wt% zinc, based on the total weight of the alloy.

Conventionally, the use of fillers in metal alloy pigment is meant to reduce the total amount of metal component, leading to a reduction in overall cost. However, replacement of even small quantities of metal in the pigment system leads to a significant reduction in performance, including corrosion resistance, of conventional coatings. Surprisingly, and in contrast to convention in the industry, the pigment system described herein includes a carbonaceous component, but without any reduction in performance of the coating. In fact, the corrosion resistance and other performance properties of the coating composition are comparable with, or even superior to, known industry-standard coating compositions.

Accordingly, the coating composition includes a pigment system that includes a filler component, namely a carbonaceous component. As used herein, the term "carbonaceous" refers to a compound or component that is rich in carbon. Specifically, the term refers to a component with a high hydrocarbon content, typically highly unsaturated, high molecular weight hydrocarbons with a high carbon:hydrogen ratio. Suitable examples include, without limitation, compounds derived from oil, coke, coal, natural gas, biomass material and the like, such as, for example, graphite, graphene, multiwalled carbon nanotubes, multilayered carbon nanotubes, carbon nanoparticles, and the like. In a preferred aspect, the carbonaceous material is a two-dimensional flake or plate-shaped material with maximum electrical conductivity. In the present invention, the carbonaceous material is graphene. The pigment system includes 0.5 to 2.5 wt% of the carbonaceous graphene component, based on the total weight of the composition.

In a preferred aspect, the pigment system is dispersed in the resin component of the binder system, and is present in an amount of at least 20 wt%, preferably 40 to 95wt%, based on the total weight of the coating composition.

The pigment:binder weight ratio of the coating composition is 1:1 to 9:1.

Other additives known in the art, may be included in the coating composition described herein. These additives include, without limitation, flatting agents, flow or viscosity modifiers, rheology modifiers, antisettling agents, waxes and/or other binders that may be included or dispersed in the coating composition. These additives arc used in amounts appropriate for the coating composition and for the ultimate end use of the cured coating.

Preferred cured coating compositions of the invention have excellent adhesion, hardness, flexibility, and abrasion resistance. In addition, these compositions, when used in a primer coating, also demonstrate corrosion resistance comparable with, or even superior to, a conventional corrosion resistant primer coating applied to a metal substrate, preferably a galvanized substrate or a GALVALUME steel substrate.

The coating compositions described herein, when applied to a substrate and cured, preferably demonstrate corrosion resistance and flexibility comparable with, or preferably superior to, commercially available conventional coatings. The corrosion resistance of a cured coating may be assessed by monitoring blister formation or creep over time using standard methods, such as salt spray testing. In a preferred aspect, a cured coating made from the composition described herein and applied over a galvanized substrate or GALVALUME steel substrate shows less than about 5 mm creep from scribe after 1000 hours of salt spray exposure. This is comparable to commercially available chromate primers currently standard in the industry.

In addition to corrosion resistance, the cured coating described herein may also demonstrate other useful performance characteristics such as, for example, optimal adhesion, flexibility, moisture resistance (resistance to condensing humidity) and the like.

The coating composition has utility in a multitude of applications. The coating composition of the invention may be applied, for example, as a pretreatment, a primer coat, an intermediate coat, or any combination thereof. The coating composition may be applied to sheet metal such as is used for lighting fixtures and architectural metal skins (e.g., gutter stock, window blinds, siding and window frames and the like) by spraying, dipping, or brushing, but is particularly suited for a coil coating operation where the composition is applied onto the sheet as it unwinds from a coil and then baked as the sheet travels toward an uptake coil winder. It is further contemplated that the coating composition of the invention may have utility in a variety of other end uses, including, industrial coating applications such as, e.g., appliance coatings, pipe, heavy machinery, shipping equipment, transport equipment, packaging coating applications, interior or exterior steel building products; HVAC applications; agricultural metal products; wood coatings; etc. In a preferred aspect, the cured coating described herein is used as an exterior coating for building materials, architectural skins and the like.

Non-limiting examples of metal substrates that may benefit from having a coating composition of the invention applied on a surface thereof include hot-rolled steel, cold-rolled steel, hot-dip galvanized, electro-galvanized, aluminum, tin plate, various grades of stainless steel, and aluminum-zinc alloy coated sheet steel (e.g., GALVALUME sheet steel). The coating composition described herein may be applied directly to a bare substrate, or applied over a pretreated substrate.

The coating composition described herein is applied as a primer coat over a bare or pretreated surface at standard dry film thickness of about 1 µm to 10 µm (approx. 0.05 mil to 0.5 mil), preferably 5 µm to 7 µm (approx. 0.2 to 0.3 mil). Without limiting to theory, the dry film thickness of the cured coating may depend on the particle size of the metal alloy pigment in the composition. The lower the particle size or aspect ratio of the metal alloy pigment, the lower the dry film thickness of the cured coating. The primer coat may optionally have a topcoat applied thereon, with dry film thickness determined by the end use of the coating or coated substrate.

For coil applications, the coating is typically cured or hardened in a heated temperature environment of from about 200 to 500°C, more preferably from about 215 to 240°C. For coil coating operations, the primer coating is typically baked for a dwell time of about 18 to 28 seconds, to a peak metal temperature (PMT) of from about 200 to 300°C. For other applications of the coating on metal, the coating is typically cured 150 to 250°C for about 5 to 30 minutes.

### TEST METHODS

Unless indicated otherwise, the following test methods were utilized in the Examples that follow.

### Corrosion Testing by Salt Spray

Salt spray testing is a standardized method to determine corrosion resistance of coatings applied to metal substrates. The test is conducted in a salt spray cabinet, where a salt solution (typically 5 wt% NaCl) is atomized and sprayed on to the surface of a test panel to which the coating composition of the invention is applied. The panel is thus maintained in a salt fog that represents a highly corrosive environment. Test parameters are used according to ASTM B117 (Standard Practice for Operating Salt Fog Apparatus).

The corrosion resistance of cured coatings prepared from the composition described herein tested by measuring creep after exposure to a corrosive environment, as described in ASTM D1654-92 (Standard Test Method for Evaluation of Painted or Coated Specimens Subjected to Corrosive Environments). A coating is applied to a test panel and cured. The panel is then sheared burr down, and exposed to salt fog. Coating loss from the substrate is measured, and results are expressed as the amount of burr down edge creep (in mm). For commercially viable coatings, creep of about 5 mm or less is desired after 1000 hours of salt spray exposure.

### Flexibility Testing

The flexibility of cured coatings is tested using the method described in ASTM D4146 (Standard Method for Formability of Zn-rich Primer Coatings) and is a useful performance measure for cured coatings to be used in coil applications. Briefly, the coatings to be tested are applied to metal panels and cured. The deformation and flexibility of the coating is tested by the application and pull-off of tape attached to the coating, and the panel is assessed to determine how much coating is removed by the tape. A rating of 10 represents no coating removal and a rating of 0 represents near total removal of coating from the substrate.

### Electrochemical Impedance Spectroscopy (EIS)

Electrochemical impedance spectroscopy (EIS) is a standard method used to determine the impedance value of a component in a coating composition or for a cured coating, which correlates to the coating composition or the cured coating's resistance to corrosion. The component or a metal panel with a cured coating is placed under a glass cell filled with an electrolyte (5% NaCl solution) along with a second electrode, and open circuit potentials are measured after a given period of immersion in the electrolyte. The more negative the measured potential of the protective coating, the greater the sacrificial protection against corrosion.
The present invention (1) refers to a corrosion-resistant coating composition, comprising: a binder system including a resin component; a crosslinking component; and a cure catalyst; and a pigment system including a ZnMg alloy pigment component having Zn content of about 74 wt% and Mg content of about 26 wt% based on the total weight of the alloy pigment; and 0.5 to 2.5 wt% of a carbonaceous graphene component, wherein the ratio of the pigment system to the binder system is 1:1 to 9:1. The present invention (2) further refers to the composition of (1), wherein the cure catalyst is selected from acid catalysts, acid precursors, amines, and combinations thereof. The present invention (3) further refers to the composition of (1), wherein the metal alloy pigment is in the form of 30 to 70 wt% metal flake and 30 to 70 wt% metal dust, based on the total weight of the composition.

### EXAMPLES

The present invention is illustrated by the following examples. It is to be understood that the particular examples, materials, amounts, and procedures are to be interpreted broadly in accordance with the invention as set forth herein. Unless otherwise indicated, all parts and percentages are by weight and all molecular weights are weight average molecular weight. Unless otherwise specified, all chemicals used are commercially available from, for example, Sigma-Aldrich, St. Louis, Missouri.

### Example 1: Preparation of Coating Compositions

Coating compositions (#1 through #6) were prepared by combining a commercially available polyester binder resin component, a melamine crosslinker, and the pigment system indicated in Table 1. The resin and crosslinker were blended together using standard mixing techniques known in the art, along with minimum levels of flow agents, and an amine catalyst (DABCO) to accelerate the crosslinking reaction. The blend was combined with the pigment system as shown in Table 1 to obtain coating compositions #1 through #5. Substrates (i.e. galvanized metal panels; GALVALUME) were prepared by alkaline cleaning and no pretreatment was applied to the panels, except as indicated. The coating compositions were applied to the metal panels using standard application methods at a dry film thickness of about 0.2 to 0.3 mil and cured at 296°C (565°F) for 18 to 28 seconds, depending on line speed and oven design, to a peak metal temperature of about 215 to 240°C (420 to 465°F). The coated panels were topcoated with a standard PVDF white topcoat and baked at the same temperature at a dwell time of about 25 to 35 seconds to a peak metal temperature of about 240 to 255°C (465 to 490°F). For comparison, a commercial chromate primer composition applied over a pretreated substrate was also used (#6).

**Table 1. Coating Compositions**

| **Coating** | **Pigment** |
|---|---|
| 1 | None |
| 2 | Zinc-rich |
| 3 | Chromate (commercial without pretreatment) |
| 4 | ZnMg alloy |
| 5 | ZnMg alloy + graphene |
| 6 | Chromate (commercial with pretreatment) |

### Example 2: Performance Testing

### Salt Spray Testing

The coating compositions of Example 1 were applied to metal test panels, baked, and sheared edged burr down, followed by exposure to salt spray according to the ASTM B117 method. Corrosion was assessed by measuring the amount of edge corrosion creep. Average creep of about 5 mm or less over 1000 hours of salt spray exposure is a desired limit for creep. Results for the coatings from Table 1 are shown in Figure 1. As can be seen from Figure 1, the ZnMg alloy primer showed significantly improved creep results relative to the other coating compositions and were comparable to the industry standard commercial chromate standard primer with pretreatment. Moreover, as shown in Figure 1, the ZnMg alloy pigment with graphene demonstrates better corrosion resistance than the coating containing only the ZnMg alloy pigment.

### Flexibility Testing

The coating compositions of Example 1 (specifically those compositions containing the ZnMg alloy pigment and the ZnMg alloy pigment with graphene) were applied to metal test panels, baked, and tested for flexibility according to the ASTM D4146 method. Results are shown in Table 2. As can be seen from the results, the ZnMg alloy primer with graphene showed significantly improved flexibility over the ZnMg alloy pigment system alone.

**Table 2. Flexibility Testing**

| **Description** | **ZnMg Pigment** | **Graphene** | **Binder** | **Tape Rating** |
|---|---|---|---|---|
| ZnMg Rich | 91.4 | 0 | 8.5 | 8 |
| ZnMg Graphene Blend | 75.1 | 2.4 | 22.6 | 10 |

### EIS Testing

Open circuit potentials for the Zn-rich and ZnMg alloy coating compositions in Example 1, either as dust (100% metal pigment), or as cured coatings applied to galvanized metal test panels (91% metal pigment) were measured against a reference electrode (standard calomel electrode, SCE) immersed in a 5 wt% NaCl electrolyte solution after 0.3 and 24 hours of immersion. Results are shown in Table 3. The measured potentials are more negative for the ZnMg powder than for the Zn-rich system, and therefore, the ZnMg powder is more sacrificial and more protective to the substrate.

**Table 3. Open Circuit Potential for Coating Composition**

| **Metal %** | **Time (h)** | **Open Circuit Potential (mV; vs. SCE)** | |
|---|---|---|---|
| | | **Zn** | **ZnMg** |
| 100 | 0.3 | -1196 | -1401 |
| 100 | 24 | -1118 | -1310 |
| | | | |
| 91 | 0.3 | -1028 | -1421 |
| 91 | 24 | -1091 | -1298 |

Having thus described the preferred embodiments of the present invention, those of skill in the art will readily appreciate that the teachings found herein may be applied to yet other embodiments within the scope of the claims hereto attached.

## Claims

1. A corrosion-resistant coating composition, comprising:
a binder system including
a resin component;
a crosslinking component; and
a cure catalyst; and
a pigment system including
a ZnMg alloy pigment component having Zn content of about 74
wt% and Mg content of about 26 wt% based on the total weight of the alloy pigment; and 0.5 to 2.5 wt% of a carbonaceous graphene component,
wherein the ratio of the pigment system to the binder system is 1:1 to 9:1.

2. The composition of claim 1, wherein the resin component is selected from polyesters, modified polyesters, polyurethanes, polyacrylates, epoxies, modified polyacrylates, and combinations thereof.

3. The composition of claim 1, wherein the crosslinking component is selected from melamine, isocyanate, and combinations thereof.

4. The composition of claim 1, wherein the metal alloy pigment is in the form of metal flake.

5. The composition of claim 1, wherein the metal alloy pigment is in the form of metal dust.

6. The composition of claim 1, wherein the carbonaceous material is mixed with the metal alloy pigment.

7. A method of making a corrosion-resistant coated article, comprising:
providing a substrate or portion thereof made of metal;
providing a coating composition according to claim 1;
applying the coating composition to the substrate; and
curing the composition to obtain a cured coating having dry film thickness of 2.5 to 12.5 µm (0.1 to 0.5 mil).

8. A coated article prepared by the method of claim 7.

## Patentansprüche

1. Korrosionsbeständige Beschichtungszusammensetzung, umfassend:
ein Bindemittelsystem, einschließlich
einer Harzkomponente;
einer Vernetzungskomponente; und
eines Härtungskatalysators; und
ein Pigmentsystem, einschließlich
einer ZnMg-Legierungspigmentkomponente, die einen Zn-Gehalt von etwa 74 Gew.-% und einen Mg-Gehalt von etwa 26 Gew.-%, basierend auf dem Gesamtgewicht des Legierungspigments, aufweist; und zu 0,5 bis 2,5 Gew.-% eine kohlenstoffhaltige Graphenkomponente,
wobei das Verhältnis des Pigmentsystems zu dem Bindemittelsystem 1 : 1 bis 9 : 1 beträgt.

2. Zusammensetzung nach Anspruch 1, wobei die Harzkomponente aus Polyestern, modifizierten Polyestern, Polyurethanen, Polyacrylaten, Epoxiden, modifizierten Polyacrylaten und Kombinationen davon ausgewählt ist.

3. Zusammensetzung nach Anspruch 1, wobei die Vernetzungskomponente aus Melamin, Isocyanat und Kombinationen davon ausgewählt ist.

4. Zusammensetzung nach Anspruch 1, wobei das Metalllegierungspigment in Form von Metallflocke vorliegt.

5. Zusammensetzung nach Anspruch 1, wobei das Metalllegierungspigment in Form von Metallstaub vorliegt.

6. Zusammensetzung nach Anspruch 1, wobei das kohlenstoffhaltige Material mit dem Metalllegierungspigment gemischt ist.

7. Verfahren zum Herstellen eines korrosionsbeständig beschichteten Artikels, umfassend:
Bereitstellen eines Substrats oder eines Abschnitts davon, der aus Metall hergestellt ist;
Bereitstellen einer Beschichtungszusammensetzung nach Anspruch 1;
Aufbringen der Beschichtungszusammensetzung auf das Substrat; und
Härten der Zusammensetzung, um eine gehärtete Beschichtung zu erhalten, die eine Trockenfilmdicke von 2,5 bis 12,5 µm (0,1 bis 0,5 mil) aufweist.

8. Beschichteter Artikel, der durch das Verfahren nach Anspruch 7 produziert wird.

## Revendications

1. Composition de revêtement résistant à la corrosion, comprenant :
un système de liant incluant
un composant de résine ;
un composant de réticulation ; et
un catalyseur de durcissement ; et
un système de pigment incluant
un composant de pigment de type alliage ZnMg ayant une teneur en Zn d'environ 74 % en poids et une teneur en Mg d'environ 26 % en poids sur la base du poids total du pigment de type alliage ; et 0,5 à 2,5 % en poids d'un composant graphène carboné,
dans laquelle le rapport du système de pigment au système de liant va de 1:1 à 9:1.

2. Composition selon la revendication 1, dans laquelle le composant de résine est choisi parmi polyesters, polyesters modifiés, polyuréthanes, polyacrylates, époxys, polyacrylates modifiés, et combinaisons de ceux-ci.

3. Composition selon la revendication 1, dans laquelle le composant de réticulation est choisi parmi mélamine, isocyanate, et combinaisons de ceux-ci.

4. Composition selon la revendication 1, dans laquelle le pigment de type alliage métallique est sous la forme de paillettes de métal.

5. Composition selon la revendication 1, dans laquelle le pigment de type alliage métallique est sous la forme de poussière de métal.

6. Composition selon la revendication 1, dans laquelle le matériau carboné est mélangé au pigment de type alliage métallique.

7. Procédé de fabrication d'un article revêtu résistant à la corrosion, comprenant :
la fourniture d'un substrat ou d'une partie de celui-ci fabriqué en métal ;
la fourniture d'une composition de revêtement selon la revendication 1 ;
l'application de la composition de revêtement au substrat ; et
le durcissement de la composition pour obtenir un revêtement durci ayant une épaisseur de film sec de 2,5 à 12,5 µm (0,1 à 0,5 mil).

8. Article revêtu préparé par le procédé selon la revendication 7.
